# EUROPEAN PATENT APPLICATION

(11) **EP 2 610 789 A1**
(43) Date of publication of application: **03.07.2013**
(21) Application number: 12199698.7
(22) Date of filing: 28.12.2012
(51) Int. Cl.: G06Q 10/04

(54) **Assessing maturity of business processes**

(30) Priority: 29.12.2011 IN MU36952011
(71) Applicant: Tata Consultancy Services Limited, Maharashtra (IN)
(72) Inventor: Kamath, Shirley, 400079 Mumbai (IN); Das Sarma, Asoke, 700091 Kolkata (IN); Kerkar, Shyam, 400079 Mumbai (IN); Prabhu, Ramesh, 600042 Velachery (IN)
(74) Representative: Meissner, Bolte & Partner

(57) **Abstract**

A method and a system described herein relate to assessment of maturity of a business process. In one implementation, the method comprises obtaining business objectives of the business process, obtaining performance metrics of the business process based on the business objectives, evaluating a practice maturity score based on practices attributes for a current state of the business process, evaluating a performance maturity score based on performance attributes for the current state of the business process, and analyzing the practice maturity score and the performance maturity score with respect to each other. The practice attributes are based on the business objectives and the performance metrics and are at least one from people-related practices, process-related practices, technology-related practices and control-related practices. The performance attributes are based on the practice attributes and are at least one from efficiency-related key performance indicators and effectiveness-related key performance indicators.

## Description

### TECHNICAL FIELD

The present subject matter relates, in general, to assessment of a business process and, particularly but not exclusively, to systems and methods for assessment of maturity of a business process.

### BACKGROUND

Business processes can be based on one or more Business Process Maturity (BPM) models that are developed to guide such business processes for achieving high performance and efficiency. A business process is understood to be a series of activities that are done in a business. Maturity of a business process defines how mature or capable the business process is to meet the client's business objectives. A business process is said to be mature if the client's business objectives are met efficiently and effectively.

Following a BPM model, a business process may go through several stages of refinement before it evolves into a mature business process. This may in turn be driven by clients having expectation for continuous improvements in their business processes for effectively and efficiently meeting the business objectives. Thus, it is important to identify ways of carrying out a business process in the most effective and efficient manner. Usually, a variety of quality initiatives are taken that address the needs of improvements in the business process and make the business process relatively more mature.

### SUMMARY

This summary is provided to introduce concepts related to assessment of maturity of a business process and these concepts are further described below in the detailed description. This summary is not intended to identify essential features of the claimed subject matter nor is it intended for use in determining or limiting the scope of the claimed subject matter.

System(s) and method(s) for assessment of maturity of a business process are described. In one implementation, the method comprises obtaining business objectives associated with the business process, obtaining performance metrics of the business process based at least on the business objectives, evaluating a practice maturity score based on practices attributes for a current state of the business process, evaluating a performance maturity score based on performance attributes for the current state of the business process, and analyzing the practice maturity score and the performance maturity score with respect to each other for the assessment of maturity of the business process. The practice attributes are based on the business objectives and the performance metrics and are at least one from people-related practices, process-related practices, technology-related practices and control-related practices. The performance attributes are based on the practice attributes and are at least one from efficiency-related key performance indicators and effectiveness-related key performance indicators.

### BRIEF DESCRIPTION OF THE DRAWINGS

The detailed description is provided with reference to the accompanying figures. In the figures, the left-most digit(s) of a reference number identifies the figure in which the reference number first appears. The same numbers are used throughout the drawings to reference like features and components.

Figure 1 illustrates a networking environment implementing a maturity assessment system for assessing maturity of a business process, according to an implementation of the present subject matter.

Figure 2 illustrates a method for assessing maturity of a business process, according to an implementation of the present subject matter.

Figure 3 illustrates a method for building a transformation roadmap of a business process, according to an implementation of the present subject matter.

### DETAILED DESCRIPTION

The present subject matter relates to systems and methods for assessing maturity of a business process. Based on the assessment of maturity, the system and the method of the present subject matter analyzes and recommends a transformation roadmap for the business process for improving the maturity of the business process.

A business process may be understood to be a series of activities that are carried out in a business. The series of activities are carried out based on the business policies and plans as decided by the people, for example, management personnel, who may be overseeing the business process. A business process may be comprised of a single process or may include a plurality of processes or sub-processes.

Each business process is understood to have a maturity level. The maturity level of a business process is an indication of the performance of that business process in order to successfully meet one or more business objectives. Examples of such business objective include, but are not limited to, cost reduction, merger and acquisition, globalization, etc. The performance and hence the maturity level of the business process can be estimated, for example, from usefulness, automation, reliability, cost effectiveness, etc., of the respective business process. Although, a mature business process may be complete in itself and may effectively and efficiently meet the business objectives, it may still strive for continuous improvement depending on client's needs and business objectives.

Conventionally, the business processes are known to focus on aspects such as quality improvement, cost reduction, delivery-time reduction and other similar parameters for assessing their performance. For these, various sub-processes, such as software development processes, business transaction processes and such, of the business process are assessed. This methodology followed by conventional methods for assessment of a business process does not substantially address the needs for improving the business process and the needs for making the business process a mature business process, and also do not provide a roadmap for achieving excellence in the business process.

A variety of business process maturity (BPM) models are known that guide business processes through various stages of development in order to address the needs for making the business process a mature business process or improving the maturity level of the business process. Conventional methodology for assessing and improving the maturity level of a business process follow performance based evaluations. The conventional methodology is based on measuring performance-related parameters, such as key performance indicators (KPIs), of the business process. With this measurement, only the quantitative performance of the process with respect to benchmark performances is evaluated. Also, by measuring only the KPIs, typically, an improvement roadmap for the business process cannot be estimated and projected. The improvement roadmap is usually essential for the evolution of the business process for achieving a higher maturity.

Systems and methods for assessing maturity of a business process are described herein. The systems and methods described herein also build and recommend a transformation roadmap for improving the maturity of the business process in achieving its business objectives. Business processes are implemented to achieve one or more business objectives. Some examples of business objectives are mentioned earlier. The business objectives may be defined by the people who are heading the business or may be based on client's needs. Each business process follows a defined set of practices for achieving the business objectives. The practices followed by the business process may be understood as practice attributes. The practice attributes of the business process describe the structure or configuration of the business process, which relates to how various steps of the business process are carried out. Based on the practice attributes, performance of the business process is determined. The performance of the business process may be determined in terms of measurable performance attributes, such as KPIs. The performance attributes relate to the outcome, result, efficiency and/or effectiveness of the practice attributes of the business process.

The methodology followed for assessing maturity of a business process, according to the present subject matter, is based on evaluating the maturity of practice attributes and the maturity of performance attributes of a current state of the business process. For the sake of simplicity, the maturity of the practice attributes hereinafter may be referred to as the practice maturity, and the maturity of the performance attributes hereinafter may be referred to as the performance maturity. The current state describes the present running state of the business process at the time of assessment. The evaluation of the practice maturity and performance maturity provides for two dimensional maturity assessment of the business process. The evaluated maturities are then analyzed with respect to each other to determine which out of the practice and the performance is lacking in maturity.

In an implementation, the practice attributes considered for evaluating the practice maturity of the business process may include people-related practices, process-related practices, technology-related practices and control-related practices. As the name suggests, the people-related practices are indicative of various aspects of how people, associated with the business process, are managed. The people-related practices may include practices related to people hiring, people training, talent management, and the like. The process-related practices are indicative of various aspects of how various processes are managed in the business process. This may include, for example, how instructions are delivered, received and processed, how are reports prepared, tracked and reviewed, and the like. The technology-related practices cover infrastructure and information technology related aspects which may include practices of how robust is the communication network, how various devices are interfaced, how data is captured, and like. Likewise, the control-related practices cover the risk management related aspects, which may include practices related to how data validation takes place, how quality is checked, and like. Various practices described herein are further detailed later in the description.

The performance attributes or KPIs of the business process are based on the practice attributes. A KPI provides a percentage-based or figurative indication of how efficiently or effectively a practice attribute of a business process is followed. For example, if a business process practices to have invoices both in paper format and electronic format, the associated KPI may indicate the percentage of invoices that are in electronic format. In an implementation, the performance attributes considered for evaluating the performance maturity of the business process relate to efficiency-related KPIs and/or effectiveness-related KPIs. As the names suggests, the efficiency-related KPIs relate to the efficiency aspect of the practice attributes, and the effectiveness-related KPIs relate to the effectiveness aspect of the practice attributes. Examples of efficiency-related KPIs include percentage of automated steps out of total steps, percentage of system downtime, cost per transaction, and the like. Examples of effectiveness-related KPIs include percentage of approved invoices, percentage of errors reported, percentage of trained people out of total people, and the like. The KPIs described herein are further detailed later in the description.

In an implementation, based on the analysis of maturities and on the business objectives, one or more performance metrics of the business process are identified for improving the maturity of the practice attributes or the maturity of the performance attributes or both. The performance metric may be understood as a measurement parameter that quantifies performance of the business. Examples of performance metrics include cost of operation of the business process or one of its sub-processes, time taken for approving the invoices, and such. The performance metrics are described in further details later in the description.

After identifying the performance metrics for improving the maturity, practices that are followed by known business processes having a maturity higher in comparison to the business process being assessed are identified. The differences between mature business processes with respect to less mature business processes are as understood to a person skilled in the art. The practices from the known business processes are identified against the identified performance metrics. Subsequent to identifying the practices from the known business processes, one practice is selected on priority basis from the identified practices, against each performance metric. The basis of selecting a practice on priority is based on impact or influence that the practice under consideration has on the performance metric and on effort of implementation of that practice in the business process. The effort of implementation of a practice may be based on the cost involved in implementation, implementation time, need for specialized skills or resources, etc.

The practices selected on priority, for the identified performance metrics, are grouped together to generate a transformation roadmap for the business process. The transformation roadmap is then recommended for the business process. It is understood that the practices present in the recommended transformation roadmap, if followed by the business process, would lead to improvement in performance and, hence, the maturity of the business process in achieving the business objectives.

As will be appreciated by a person skilled in the art, the methodology of the present subject matter for assessment and improvement of maturity of a business process, based on business objectives, provides a fulcrum to identify and map best known business practices having high maturity, high impact and less effort of implementation that can drive and influence performance. The methodology of the present subject matter for assessing and improving the maturity of the business process is substantially more effective and organized in comparison to the conventional methodologies.

While aspects of described systems and methods for assessing maturity of a business process can be implemented in any number of different computing systems, environments, and/or configurations, the implementations are described in the context of the following system(s).

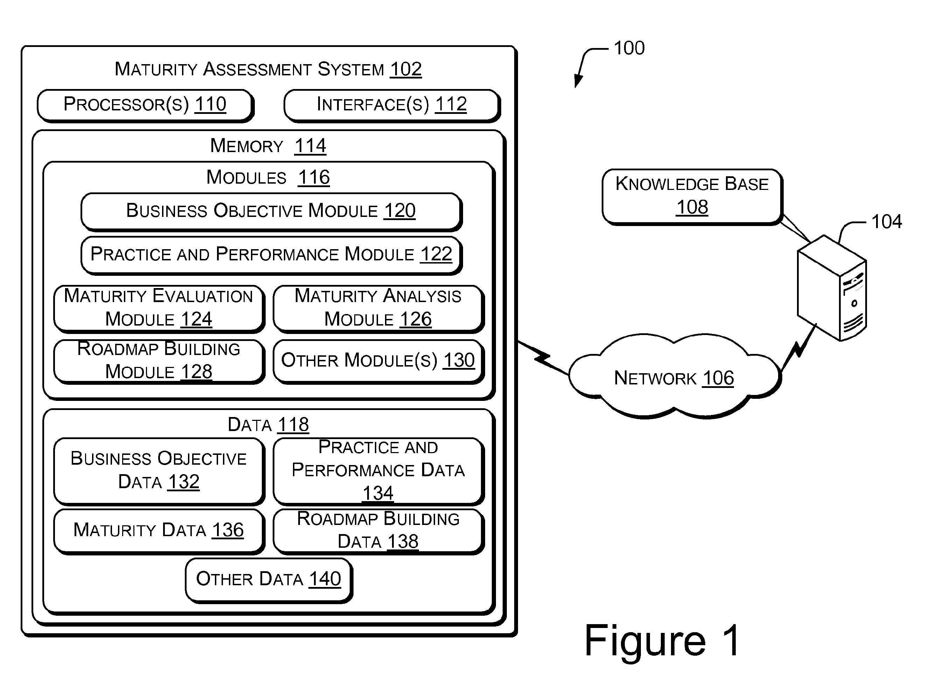

Figure 1 illustrates a networking system 100 implementing a maturity assessment system 102 configured to assess maturity of business processes, according to an implementation of the present subject matter. The networking system 100 may be understood as a public or a private networking system. In an implementation, the maturity assessment system 102 is also configured to build and recommend a transformation roadmap, based on the assessment of maturity, for improving the maturity of the business processes. The maturity assessment system 102 may be implemented in a computing device that includes, but is not limited to, a desktop PC, a notebook, a portable computer, a smart phone, a PDA, a tablet, and the like.

During the assessment of maturity of the business process, the maturity assessment system 102 may communicate with a server 104 hosting data and various applications required for the purpose of assessment and building the transformation roadmap. The server 104 may be implemented as any of a variety of computing devices, including, for example, a server, a workstation, and a mainframe computer. The server 104 may be one, or combination of one or more, storage server or network server.

The maturity assessment system 102 of the present subject matter is communicatively coupled to the server 104 over a network 106 through one or more communication links. The communication links between the maturity assessment system 102 and the server 104 are enabled through a desired form of communication, for example, via dial-up modem connections, cable links, and digital subscriber lines (DSL), wireless or satellite links, or any other suitable form of communication. The network 106 may be understood as a network, including personal computers, laptops, various servers and other computing devices.

Further, the network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network may include network devices, such as network switches, hubs, routers, and Host Bus Adapters (HBAs), for providing a link between the maturity assessment system 102 and the server 104. The network devices within the network 106 may interact with the maturity assessment system 102 and the server 104 through the communication links.

In an implementation, the server 104 is implemented with a knowledge base 108. The knowledge base 108 includes information or data that may be required and hence utilized for the purposes of assessment of maturity of business processes as described in the description hereinafter.

Further, the maturity assessment system 102 may be a software-based implementation or a hardware-based implementation or both. In one implementation, the maturity assessment system 102 may be implemented on the server 104 or may be implemented external to the server 104 and accessed for the purposes of assessing maturity of business processes.

The maturity assessment system 102 includes one or more processor(s) 110, interface(s) 112, and a memory 114 coupled to the processor(s) 110. The processor 110 can be a single processor unit or a number of units, all of which could include multiple computing units. The processor 110 may be implemented as one or more microprocessors, microcomputers, microcontrollers, digital signal processors, central processing units, state machines, logic circuitries, and/or any devices that manipulate signals based on operational instructions. Among other capabilities, the processor 110 is configured to fetch and execute computer-readable instructions and data stored in the memory 114.

The interface(s) 112 may include a variety of software and hardware interfaces, for example, interfaces for peripheral device(s), such as a keyboard, a mouse, an external memory, and a printer. The interface(s) 112 may enable the maturity assessment system 102 to communicate with other devices, such as external computing devices and external databases.

The memory 114 may include any computer-readable medium known in the art including, for example, volatile memory such as static random access memory (SRAM) and dynamic random access memory (DRAM), and/or non-volatile memory, such as read only memory (ROM), erasable programmable ROM, flash memories, hard disks, optical disks, and magnetic tapes.

The memory 114 includes module(s) 116 and data 118. The modules 116 include routines, programs, objects, components, data structures, and the like, which perform particular tasks or implement particular abstract data types. The modules 116 further include modules that supplement applications on the maturity assessment system 102, for example, modules of an operating system. The data 118, amongst other things, serves as a repository for storing data that may be processed, received, or generated by one or more of the modules 116.

In an implementation, the modules 116 of the maturity assessment system 102 include a business objectives module 120, a practice and performance module 122, a maturity evaluation module 124, a maturity analysis module 126, a roadmap building module 128 and other module(s) 130. The other module(s) 130 may include programs or coded instructions that supplement applications and function, for example, programs in the operating system of the maturity assessment system 102.

In an implementation, data 118 include business objective data 132, practice and performance data 134, maturity data 136, roadmap building data 138 and other data 140. The other data 140 includes data generated as a result of the execution of one or more modules in the other module(s) 130.

In an implementation, a user may access the maturity assessment system 102 for assessing maturity of a business process. For the purposes of the description herein, the user may be understood as a professional who has skills and capability of assessing maturity of business processes. In an implementation, the user may be an authentic user who is allowed to access the maturity assessment system 102. In an implementation, the user is provided with a user interface, such as a graphic user interface (GUI), which may be used for the purposes of assessing maturity of business processes.

At first, the user identifies a business process for which maturity is to be assessed, and the maturity assessment system 102 may accordingly receive a request from the user for assessing the maturity of the business process. The business process may be related to, for example, vendor payments in purchase-to-pay, contract management in supply chain, customer collection in order to cash. The business objectives module 120 allows the user to list business objectives of the business process. The business objectives may include current business objectives and future business objectives. The business objectives may include cost reduction, improve controls and compliance, accelerate business growth, enhance customer satisfaction, merger and acquisition and globalization. The business objectives module 120 further allows the user to list performance metrics for the business process that have a high impact on the listed business objectives. The performance metrics are listed based on the relevant data of the business process fed by the user, or fetched from the pre-stored data in the knowledge base 108, or from an external data repository. In an implementation, the performance metrics may include one or more of business metrics and operational metrics. In an implementation, the business objectives and the performance metrics may be manually fed by the user or may be fetched by the user from a data repository. The business objectives and the performance metrics are stored in the business objective data 132.

The practice and performance module 122 is configured to allow the user to enlist possible practice attributes for the business process based on the listed business objectives and performance metrics. In an implementation, the practice attributes that have a high impact on the listed performance metrics are listed. The practice attributes listed by the user are at least one from practice categories, such as people-related practices, process-related practices, technology-related practices and control-related practices. Tables 1 to 4 provide details of the practice categories. Each practice category may comprise various practice types. Tables 1 to 4 also provide details against each of the practice types based on which the practice attributes are decided. The practice attributes may be in the form of questions or answers, against the practice-types, which describe the practices followed by the business process. Table 5 provides examples of the possible practice attributes corresponding to a practice type of the process-related practice. The practice attributes listed by the user are stored in the practice and performance data 134. It is to be understood that the possible practice types and practice attributes listed in Tables 1 to 5 are only for the purpose of explanation, and other practice types and practice attributes may be considered.

**TABLE 1**

| Practice Category | Practice Type | Details |
|---|---|---|
| Process | Data Source | → Source of input - Paper, Softcopy, Email |
| | Input | → How are instructions processed? |
| | Priority Instructions | → How are priority instructions processed? |
| | Process Document | → Quality of process maps |
| | Entities/ Touch Points | → Number of internal and external units that the team need to interact with |
| | Work schedule | → How are instructions allocated to teams? |
| | Approval | → How does approval process happen? |
| | Queries | → How are queries logged, tracked & reported? Is there a mechanism to identify process weaknesses based on received queries? |
| | Reports | → Are there production reports which are manually produced? How are reports tracked and reviewed? |

**TABLE 2**

| Practice Category | Practice Type | Details |
|---|---|---|
| People | Hiring | → Is there a clearly defined job description based on which hiring happens? |
| | Onboarding | → Is there an induction and onboarding process for new team members? |
| | Training | → How does training happen? Are there tools/ scoring/ history available? |
| | Certification | → Is there a certification process? Is it from accredited agencies? |
| | Talent Management | → How are hi-pots and SMEs identified and groomed? |
| | Span of control | → Is there a clearly defined span which is monitored at regular intervals? |
| | Attrition | → Is attrition tracked and monitored? |
| | Hiring | → Is there a clearly defined job description based on which hiring happens? |

**TABLE 3**

| Practice Category | Practice Type | Details |
|---|---|---|
| Technology | Data Capture | → Is there a mechanism to capture data electronically e.g. OCR etc? Is data capture on real-time basis or batch basis? Are the systems available through web? |
| | Workflow / BPM | → Is there a BPM or workflow tool to schedule and roster work in an intelligent manner - e.g. allocating complex tasks to staff with > 1 year experience etc.? |
| | Tools | → What are the tools used within the process e.g. Recon tool etc.? |
| | Systems | → Are there multiple systems? Legacy systems? |
| | ERP Architecture | → Is the ERP architecture customized to meet process needs? |
| | Interface | → Is there an automated interface across multiple systems? |
| | Archival | → Does the system have a robust archival and search mechanism? |

**TABLE 4**

| Practice Category | Practice Type | Details |
|---|---|---|
| Control | Data Validation | → How does data validation happen? Is there a maker-checker or day 2 quality check? |
| | Exceptions | → How are exceptions identified and reported? |
| | Quality check | → Is there an independent check on process quality? |
| | Audit | → Are there regular internal /external audits? |
| | BCP | → Is there a comprehensive BCP plan to adequately address critical needs? |

**TABLE 5**

| Practice Category | Practice Type | Details | Practice Attributes |
|---|---|---|---|
| Process | Data Source | → Source of input | → Invoices are largely paper based |
| | | | → Invoices are largely paper based with electronic data capture |
| | | | → Invoices are both in paper format and electronic format |
| | | | → Invoices are mostly in electronic format with image capture for paper invoices |

The practice and performance module 122 also allows the user to enlist possible performance attributes based on the listed practice attributes, for the business process. The performance attributes listed by the user are from at least one KPI category, such as efficiency-related KPIs and effectiveness-related KPIs. The KPIs may correspond to the practice categories. Table 6 provides examples of the possible KPIs corresponding to the people-related, process-related, technology-related and control-related practices. As mentioned earlier, KPIs provide percentage-based or figurative indications of how efficiently or effectively the practice attributes of a business process are followed. Table 7 provides an example of efficiency-related KPI and distributions of percentages for that KPI. The performance attributes listed by the user are stored in the practice and performance data 134. It is to be understood that the possible KPIs listed in Table 6 and the percentage ranges of efficiency-related KPI in Table 7 are only for the purpose of explanation, and other KPIs and percentage ranges may be considered.

**TABLE 6**

| Practice Category | Efficiency-related KPI | Effectiveness-related KPI |
|---|---|---|
| Process | → % of manual steps to total steps | → % of queries received |
| | → % of input rejects to total volumes | → % of delayed output to total |
| | → % of queries raised to total volumes | → % of rejected output tototal |
| | → % of modifications to total volumes | → % of identified / reportederrors |
| | → % of idle time | |
| | → Cost per transaction | |
| People | → FTE Productivity / Average Industry FTE Productivity | → % of SME to Total FTE |
| | → % of roles that are clearly defined / total number of roles | → % of trained or certifiedstaff / Total staff |
| | → Variations in span of control with Industry standard | |
| Technolog y | → % of system downtime | → % of real-time tracking reports available to total tracking reports |
| | → Number of systems/tools used in the process | |
| Control | → % change control review done / total change | → % of tested BCP / Total BCP |
| | | → % of unidentified or aging exceptions to Total exceptions |
| | | → % of reported audit failures |
| | | → % of errors reported |

**TABLE 7**

| Practice Category | Practice Attribute | Efficiency-related KPI |
|---|---|---|
| Process | → Invoices are both in paper format and electronic format | → % of electronic invoices < 20 % |
| | | → % of electronic invoices 21-70 % |
| | | → % of electronic invoices 71 - 90 % |
| | | → % of electronic invoices > 90 % |

In an implementation, the user may manually feed the practice and the performance attributes or may automatically fetch the attributes from an external data repository. In an implementation, the knowledge base 108 may have the information or data related to the practice and the performance attributes, and the maturity assessment system 102 may communicate with the knowledge base 108 to facilitate the user in enlisting the practice attributes and the performance attributes for the business process.

Further, each practice attribute is assigned with a score which is indicative of the level of practice maturity the attribute offers to the business process. The score mentioned herein may be understood as the maturity score. A similar maturity score is assigned to each performance attribute depending on its range of percentage or value. This maturity score is indicative of the level of performance maturity of the business process. In an example, the practice attributes and the performance attributes may be assigned a score on a scale from 1 to 5 on the basis of the maturity offered or resulted. The score of 1 implies least maturity and the score of 5 implies highest maturity. The maturity scores may be assigned on a predefined basis based on company standards or as decided by the people or professionals associated with the business process. Table 8 illustrates an example of maturity scores of the practice attributes of Table 5 and of the efficiency-related KPIs of Table 7. The maturity scores of the listed practice attributes and performance attributes are stored in the practice and performance data 134. It is to be understood that the possible maturity scores illustrated in Table 8 are only for the purpose of explanation, and other maturity scores may be assigned.

**TABLE 8**

| Practice Attributes | Maturity Score | Efficiency-related KPI | Maturity Score |
|---|---|---|---|
| → Invoices are largely paper based | 1 | → % of electronic invoices < 20 % | 2 |
| → Invoices are largely paper based with electronic data capture | 2 | → % of electronic invoices 21-70 % | 3 |
| → Invoices are both in paper format and electronic format | 3 | → % of electronic invoices 71 - 90 % | 4 |
| → Invoices are mostly in electronic format with image capture for paper invoices | 4 | → % of electronic invoices > 90 % | 5 |

In an implementation, the practice and performance module 122 allows the user to select a set of practice attributes, from the listed people-related, process-related, technology-related and control-related attributes, for the current state of the business process. Further, the practice and performance module 122 also allows the user to select KPIs, from the listed efficiency-related KPIs and effectiveness-related KPIs, for the current state of the business process. The data related to the selected practice attributes and the selected KPIs, including their maturity scores, are stored in practice and performance data 134.

In an implementation, the maturity evaluation module 124 is configured to evaluate a practice maturity score and a performance maturity score based on the maturity scores of the selected practice attributes and performance attributes, respectively. In an implementation, the practice maturity score is an average of maturity scores of all the selected practice attributes, and the performance maturity score is an average of maturity scores of all the selected performance attributes. The practice and performance maturity scores are stored in the maturity data 136.

In an implementation, the maturity analysis module 126 is configured to analyze the practice maturity score and performance maturity score with respect to each other. In an implementation, for the analysis, the practice maturity score is compared with the performance maturity score. The comparison of maturity scores facilitates in determining whether the practice followed by the business process lacks maturity or the performance of the business process based on the practice attributes lacks maturity. It is understood that the one with the lower score lacks maturity and hence actions may be taken to improve it. In an implementation, the maturity analysis module 126 compares the two maturity scores and identifies the lower maturity score. Although the description herein describes maturity assessment of one business process, the maturity assessment system 102 may be utilized to assess maturities of more than one business process.

In an implementation, based on the analysis of maturity of the business process, the roadmap building module 128 is configured to build or generate a transformation roadmap for the business process to improve the maturity of the business process. For this, the roadmap building module 128 is configured to identify, based on the analysis of maturities and the business objectives, one or more performance metrics of the business process for the purposes of improving the practice maturity score or the performance maturity score or both, as the case may be. In an implementation, the identified performance metrics are stored in roadmap building data 138. The identified performance metrics are related to the practice attributes and/or the performance attributes that have lead to a low maturity.

Further, based on the identified performance metrics, the roadmap building module 128 is configured to scan known business processes that are higher in maturity with respect to the business process being assessed by the maturity assessment system 102. The roadmap building module 128 scans to identify practices, practiced by the known business processes, which have lead to the higher maturities. In an example, the known business processes having maturity scores of, for example, 4 to 5 (on a scale of 1 to 5) are scanned to identify the practices. Such practices of the known business processes hereinafter may be referred to as the best business practices. In an implementation, a set of best business practices are identified against each of the identified performance metrics, and the data related to the identified best business practices is stored in the roadmap building data 138. Further, the roadmap building module 128 obtains impacts and efforts of implementation for the identified best business practices. As mentioned earlier, the impact of a practice is based on the influence that practice has on the performance metric and the effort of implementation of a practice is based on the cost involved in implementation, implementation time, need for specialized skills or resources, etc. In an implementation, the impact may be described in terms of low, medium and high, and the effort of implementation of a practice may be described in terms of easy, moderate and difficult. The data related to impacts and efforts of implementation are stored in the roadmap building data 138.

In an implementation, the knowledge base 108 has information or data related to the best business practices along with the information or data related to the impacts and efforts of implementation. For the identification of practices and the obtaining impacts and effort of implementation, by the roadmap building module 128, the maturity assessment system 102 communicates with the knowledge base 108. In an implementation, the best business practices are identified by the professionals having skills to understand and assess business processes, and the relevant data, as mentioned above, of such business practices is fed in the knowledge base 108. In one implementation, the maturity assessment system 102 communicates with an external data repository having the data of the best business practices.

Further, the roadmap building module 128 is configured to select one best business practice from the identified best business practices for each of the performance metrics, which has higher impact and lesser effort of implementation. For the selection of the one best business practice, the roadmap building module 128 may compare the impact levels and the levels of effort of implementation amongst the best business practices identified for each performance metric. Based on the selection, the roadmap building module 128 is configured to generate a transformation roadmap by collating the selected best business practices. The data related to the selected best business practices for the performance metrics and transformation roadmap are stored in the roadmap building data 138.

Table 9 shows an illustrative example of the transformation roadmap, built by the roadmap building module 128 of the maturity assessment system 102, for a business process. Table 9 lists best business practices A to F as identified against five performance metrics, metric 1 to metric 5. The impacts and the efforts of implementation for the best business practices A to F are provided against each of performance metrics. The impact is represented as: H (high), Me (medium) and L (low), and the effort of implementation is represented as: E (easy), Mo (moderate) and D (difficult). As shown, the transformation roadmap is represented by the selected boxes (in bold). While selecting the one best business practice for a performance metric, the higher level of impact is given a priority with respect to the lesser level of effort of implementation. For example, for metric 1 in Table 9, best business practice A with H + E (high impact and easy effort of implementation) is selected over the best business practice F with Me + E (medium impact and easy effort of implementation). Similarly, for metric 5 in Table 9, best business practice E with H + D (high impact and difficult effort of implementation) is selected over the best business practice F with Me + E (medium impact and easy effort of implementation). It is to be understood that the example of transformation roadmap illustrated in Table 9 is only for the purpose of explanation, and other transformation roadmap with other performance metrics, best business practices, impacts and efforts of implementation may be considered.

**TABLE 9**

| Best business practices | Performance Metrics of a Business Process | | | | |
|---|---|---|---|---|---|
| | Metric 1 | Metric 2 | Metric 3 | Metric 4 | Metric 5 |
| A | **H + E** | Me + E | L + E | L + E | L + E |
| B | L + Mo | Me + Mo | Me + Mo | **H + Mo** | L + Mo |
| C | Me + Mo | **H + M** | H + Mo | L + Mo | Me + Mo |
| D | L + D | L + D | Me + D | L + D | L + D |
| E | L + D | H + D | L + D | Me + D | **H + D** |
| F | Me + E | L + E | **H + E** | L + E | Me + E |

Further, the roadmap building module 128 is configured to recommend the transformation roadmap for the business process for improving the maturity of the business process. The recommending of the transformation roadmap may be understood as a proposal based on which if the selected best business practices are considered and followed by the business process, being assessed, the maturity of the business process is improved and thus excellence may be achieved in meeting the business objectives. In an implementation, the user reports the assessed maturity and the transformation roadmap for the business process to, for example, the people associated with the business process or heading the business process.

In an implementation, the knowledge base 108 is updated with new best business practices practiced by known business processes, which lead to substantially higher maturities. In an implementation, the knowledge base 108 is updated in real-time or on periodic basis. The updated knowledge base 108 is utilized by the maturity assessment system 102 for building the transformation roadmap, as explained earlier.

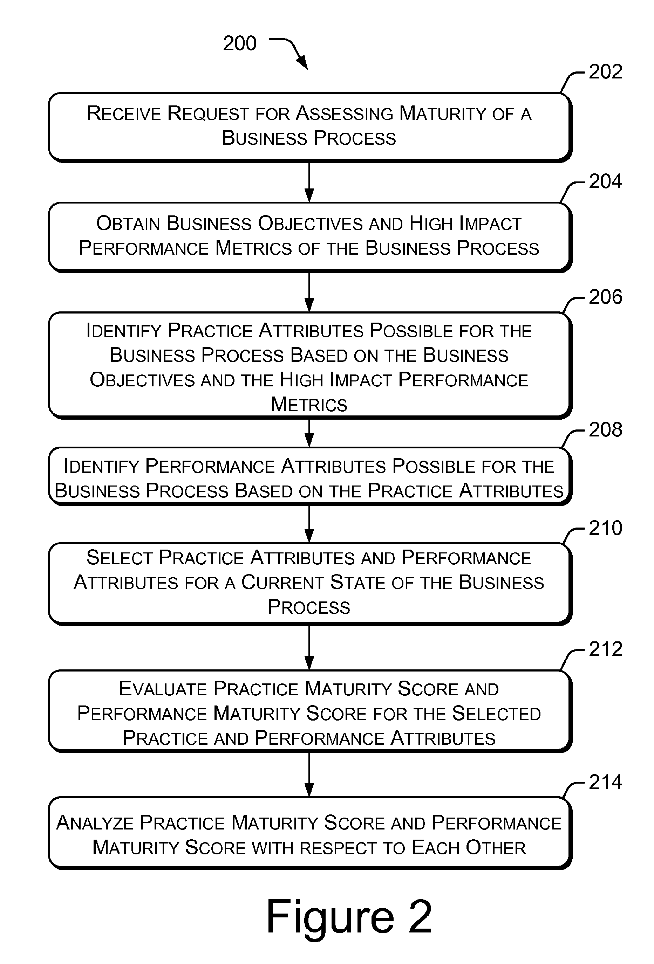

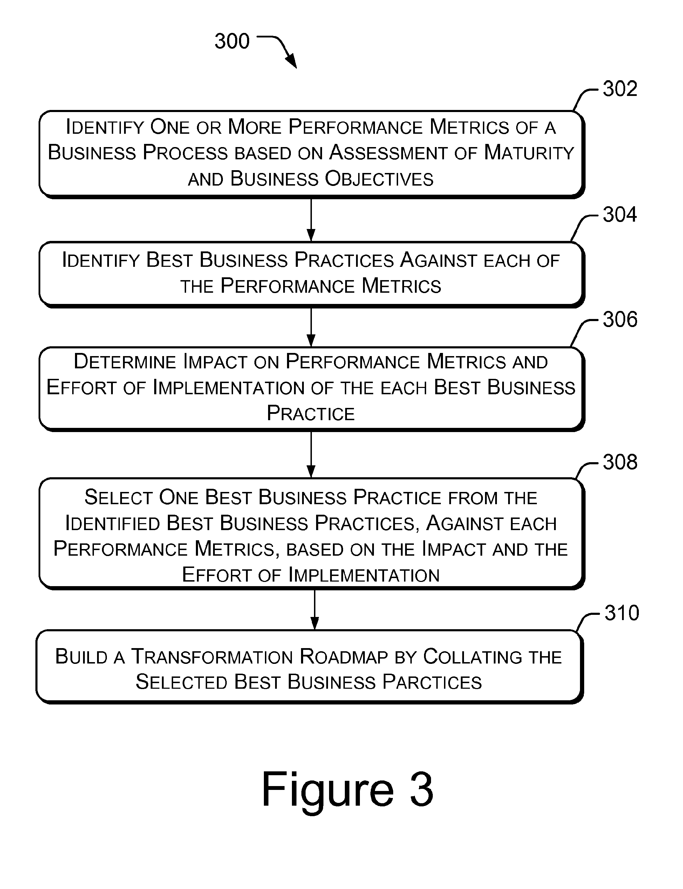

Figure 2 illustrates a method 200 for assessing maturity of a business process, in accordance with an implementation of the present subject matter, while Figure 3 illustrates a method 300 for building a transformation roadmap of the business process, in accordance with an embodiment of the present subject matter. The methods 200 and 300 may be described in the general context of computer executable instructions. Generally, computer executable instructions can include routines, programs, objects, components, data structures, procedures, modules, and functions that perform particular functions or implement particular abstract data types. The methods 200 and 300 may also be practiced in a distributed computing environment where functions are performed by remote processing devices that are linked through a communications network. In a distributed computing environment, computer executable instructions may be located in both local and remote computer storage media, including memory storage devices.

The order in which the methods 200 and 300 are described is not intended to be construed as a limitation, and any number of the described method blocks can be combined in any order to implement the methods 200 and 300, or an alternative method. Additionally, individual blocks may be deleted from the method without departing from the spirit and scope of the subject matter described herein. Furthermore, the methods 200 and 300 can be implemented in any suitable hardware, software, firmware, or combination thereof. Also, although the method 200 for assessing maturity of a business process and the method 300 for building the transformation roadmap are described as different methods, in an implementation, the method 300 may be executed in continuation to the method 200.

Referring to Figures 2 and 3, although the method 200 for assessing maturity of a business process and the method 300 for building a transformation roadmap of the business process may be implemented in a variety of maturity assessment systems, in the embodiments described in Figures 2 and 3, the methods 200, 300 are explained in context of the aforementioned maturity assessment system 102 for the ease of explanation.

At block 202, a request is received for assessing maturity of a business process. In an implementation, the request may be received from a user, such as a professional having skills to assess maturities of business processes. The user may identify a business process for assessment of maturity and accordingly make a request at the maturity assessment system 102.

At block 204, business objectives of the business process being assessed and performance metrics that have a high impact on the business objectives are obtained. In an implementation, the business objectives and the performance metrics are listed in the maturity assessment system 102. After obtaining the business objectives and the performance metrics, practice attributes possible for the business process, based on the business objectives and the performance metrics, are identified at block 206. In an implementation, the practice attributes that have a high impact on the performance metrics are identified. The possible practice attributes are identified from people-related, process-related, technology-related and control-related practices. At block 208, performance attributes possible for the business process, based on the practice attributes, are identified. The possible performance attributes are identified from efficiency-related KPIs and effectiveness-related KPIs. In an implementation, the practice attributes and the performance attributes are fed by the user in the maturity assessment system 102. In one implementation, the practice and performance attributes are identified from a knowledge base 108 or an external date repository by the user depending upon his intellect or automatically by the maturity assessment system 102.

After identifying the possible practice and performance attributes at block 208, the practice attributes and the performance attributes are selected for a current state of the business process at block 210. The selection is from the identified possible practice and performance attributes and is based on the practices followed and the performance of the business process at the time of assessment of its maturity. In an implementation, the selection may be done at the maturity assessment system 102, by the user or by one or more professionals skilled enough to understand business processes.

At block 212, a practice maturity score and a performance maturity score for the selected practice attributes and performance attributes are evaluated. As described earlier, the practice and performance maturity scores are evaluated by averaging the maturity scores assigned to the selected practice attributes and averaging the maturity scores assigned to the selected performance attributes, respectively. In an implementation, the maturity assessment system 102 fetches the maturity scores assigned to each of the practice and performance attributes as described earlier, and averages the scores to evaluate the practice and performance maturity scores.

Based on the evaluation at block 212, the practice maturity score and the performance maturity score are analyzed with respect to each other at block 214. For the analysis, the practice maturity score is compared with the performance maturity score by the maturity assessment system 102. From the comparison, it is determined whether the practices followed by the business process lack maturity or the performance of the business process based on its practice lack maturity. Based on the analysis necessary actions may be taken to improve the maturity of the business process.

Referring to Figure 3 that illustrates the method 300 for building a transformation roadmap of the business process, at block 302, one or more performance metrics of the business process are identified based on the assessment from the method 200 and the business objectives. The performance metrics are identified in the context of the practice attributes and the performance attributes that have lead to lower maturity of the business process. In an implementation, the maturity assessment system 102 identifies the performance metrics based on the data fed by the user, or from the knowledge base 108 or an external data repository having the relevant data associated with the business process.

After identifying the performance metrics, best business practices are identified against each of the performance metrics at block 304. As mentioned earlier, the best business practices are the practices followed by known business processes that have maturities, for example, higher than the business process being assessed. At block 306, the impacts of the each best business practice on the performance metrics and the effort of implementation of the each best business practice are obtained. In an implementation, the maturity assessment system 102 may communicate with the knowledge base 108 for identifying the best business practices against each performance metric and for obtaining the impact and the effort of implementation for each best business practice.

At block 308, one best business practice, from the identified best business practices, is selected against each performance metric based on the impact and the effort of implementation. The best business practice which has a highest impact and involves a least effort of implementation is selected against the performance metric. In an implementation, the impacts levels and the levels of effort of implementation are compared by the maturity assessment system 102 amongst the best business practices identified against each performance metric.

After selected the one best business practice against the each performance metric, the transformation roadmap is generated at block 310 by collating the selected best business practices. In an implementation, the maturity assessment system 102 may build and recommend the transformation roadmap for the business process for improving its maturity.

The present subject matter provides for an advantageous methodology that follows two dimensional maturity assessments, i.e. the practice and the performance, of a business process and builds a transformation roadmap for the business process, by considering best business practices followed by known business processes, to improve its maturity. Thus, the methodology of the present subject matter is advantageous over conventionally known methodologies for assessing maturity of a business process.

Although embodiments for assessment of maturity of a business process have been described in language specific to structural features and/or methods, it is to be understood that the invention is not necessarily limited to the specific features or methods described. Rather, the specific features and methods are disclosed and explained in the context of a few embodiments for assessment of maturity of a business process.

## Claims

1. A method for assessment of maturity of a business process comprising:
obtaining business objectives associated with the business process;
obtaining performance metrics of the business process, based at least on the business objectives;
evaluating a practice maturity score based on practices attributes for a current state of the business process, wherein the practice attributes are based on the business objectives, the performance metrics, and at least one of people-related practices, process-related practices, technology-related practices and control-related practices;
evaluating a performance maturity score based on performance attributes for the current state of the business process, wherein the performance attributes are based on the practice attributes and are at least one from efficiency-related key performance indicators and effectiveness-related key performance indicators; and
analyzing the practice maturity score and the performance maturity score with respect to each other for the assessment of maturity of the business process.

2. The method as claimed in claim 1, wherein the evaluating the practice maturity score comprises averaging maturity scores of the practice attributes of the current state of the business process.

3. The method as claimed in claim 1, wherein the evaluating the performance maturity score comprises averaging maturity scores of the performance attributes of the current state of the business process.

4. The method as claimed in claim 1, wherein the analyzing comprises comparing the practice maturity score and the performance maturity score to determine a lower score from the practice maturity score and the performance maturity score.

5. The method as claimed in claim 1 further comprising:
identifying at least one performance metric, based on the analysis and based on the business objectives, for improving at least one of the practice maturity score and the performance maturity score.

6. The method as claimed in claim 5, wherein the performance metric is one of a business metric and an operational metric.

7. The method as claimed in claim 5 further comprising:
identifying best business practices associated with known business processes, against the at least one performance metric, wherein the known business processes have higher maturities with respect to the business process being assessed; and
obtaining an impact on the performance metric and an effort of implementation in the known business process for the each identified best business practice from the corresponding known business process, wherein
the identifying the best business practices and the obtaining the impact and the effort of implementation are based on information from a knowledge base.

8. The method as claimed in claim 7 further comprising:
selecting one best business practice, from the identified best business practices, for the each performance metric, based on the impact and the effort of implementation; and
generating a transformation roadmap for the business process, wherein the transformation roadmap comprises the selected best business practice for the each performance metric, wherein
the selected best business practice has a highest impact and a least effort of implementation.

9. The method as claimed in claim 7 further comprising:
updating the knowledge base with new business practices practiced by known business processes, wherein the new business practices lead to a substantially higher maturity; and
utilizing the updated knowledge base for identifying the best business practices.

10. A maturity assessment system (102) comprising:
a processor (110); and
a memory (114) coupled to the processor (110), wherein the memory (114) comprises:
a maturity evaluation module (124) configured to
evaluate a practice maturity score based on practice attributes for a current state of a business process, wherein the practice attributes are based on business objectives and performance metrics of the business process and are at least one from people-related practices, process-related practices, technology-related practices and control-related practices; and
evaluate a performance maturity score based on performance attributes for the current state of the business process, wherein the performance attributes are based on the practice attributes and are at least one from efficiency-related key performance indicators and effectiveness-related key performance indicators; and
a maturity analysis module (126) configured to compare the practice maturity score and the performance maturity score with respect to each other to determine a lower score from the practice maturity score and the performance maturity score.

11. The maturity assessment system (102) as claimed in claim 10, wherein the maturity evaluation module (124) is configured to average maturity scores of the practice attributes of the current state of the business process for the evaluation of the practice maturity score and to average maturity scores of the performance attributes of the current state of the business process for the evaluation of the performance maturity score.

12. The maturity assessment system (102) as claimed in claim 10 further comprising a roadmap building module (128) configured to identify at least one performance metric, based on the analysis and based on the business objectives of the business process, for improving at least one of the practice maturity score and the performance maturity score.

13. The maturity assessment system (102) as claimed in claim 12, wherein the roadmap building module (128) is configured to:
identify best business practices associated with known business processes, against the at least one performance metric, wherein the known business processes have higher maturities with respect to the business process being assessed; and
obtain an impact and an effort of implementation for each identified best business practice from the corresponding known business process, wherein
the maturity assessment system (102) is configured to communicate with a knowledge base (108) for identifying the best business practices and for obtaining the impact and the effort of implementation.

14. The maturity assessment system (102) as claimed in claim 13, wherein the roadmap building module (128) configured to:
select one best business practice, from the identified best business practices, for the each performance metric, based on the impact and the effort of implementation; and
generate a transformation roadmap for the business process, wherein the transformation roadmap comprises the best business practice selected for the each performance metric, wherein
the selected best business practice has a highest impact and a least
effort of implementation.

15. A computer-readable medium having computer-executable instructions that when executed perform acts comprising:
obtaining business objectives of a business process;
obtaining performance metrics of the business process based at least on the business objectives;
evaluating a practice maturity score based on practices attributes for a current state of the business process, wherein the practice attributes are based on the business objectives and the performance metrics and are at least one from people-related practices, process-related practices, technology-related practices and control-related practices;
evaluating a performance maturity score based on performance attributes for the current state of the business process, wherein the performance attributes are based on the practice attributes and are at least one from efficiency-related key performance indicators and effectiveness-related key performance indicators; and
analyzing the practice maturity score and the performance maturity score with respect to each other for assessment of maturity of the business process.
